# EUROPEAN PATENT SPECIFICATION

(11) **EP 1 506 248 B1**
(45) Date of publication and mention of the grant of the patent: **08.11.2006**
(21) Application number: 03776175.6
(22) Date of filing: 28.04.2003
(51) Int. Cl.: C08G 63/82

(54) **CATALYST SYSTEMS FOR POLYCONDENSATION REACTIONS**
KATALYSATORSYSTEM FÜR POLYKONDENSATIONSREAKTIONEN
SYSTEMES CATALYSEURS POUR REACTIONS DE POLYCONDENSATION

(30) Priority: 09.05.2002 US 379676 P
(43) Date of publication of application: 16.02.2005
(73) Proprietor: Equipolymers GmbH, 06258 Schkopau (DE)
(72) Inventor: WIEGNER, Jens-Peter, 06130 Halle (DE); VOERCKEL, Volkmar, 06217 Merseburg (DE); RUNKEL, Dietmar, 06201 Merseburg (DE); FEIX, Gunter, 06122 Halle (DE); STAEUBER, Hans, CH-8832 Wollerau (CH)
(74) Representative: Raynor, John
(86) International application number: PCT/US2003/013132
(87) International publication number: WO 2004/014982

(56) References cited:
- WO-A-01/42335
- WO-A-03/004547

## Description

The invention concerns new catalyst systems for the synthesis of polyesters, for instance the manufacture of polyethylene terephthalate and its copolyesters.

The synthesis of polyesters such as polyethylene terephthalate requires the use of catalysts in the polycondensation steps (melt phase and possibly solid state). A number of patents can be found in the literature that describe the use of catalytically active substances. Today, antimony and titanium compounds are used in particular in industry, in the manufacture of polyethylene terephthalate. This is also reflected in the numerous patents that describe the use of such compounds. Polyester-soluble antimony compounds are described as polycondensation catalysts in US patents 3,965,071, 3,998,793, 4,039,515, 4,116,942, 4,133,800, 4,454,312, 5,750,635 and 5,780,575. Modified antimony derivatives (stabilized by substances with double bonds to prevent reduction to metallic antimony) are for instance the subject of patents US 4,067,856, US 4,067,857 and US 4,130,552. Antimony salts of trimellithic acid esters are also used as catalysts in the manufacture of polyethylene terephthalate (US 5,478,796).

A combination of sulfonic acid, titanate and antimony (or germanium) compounds is the object of US patent 5,905,136. US patents 5,286,836 and 5,714,570 mention combinations of antimony and titanium compounds as catalytically active. US patent 6,372,879 must also be mentioned in this context. The synergistic effects of catalyst systems described in this patent appear when complex titanium/antimony/(oxalate) systems are used. Germanium compounds have also been described as catalysts for the polycondensation reaction (US 5,378,796, US 5,830,981, US 5,837,786 and US 5,837,800 ). However, for economic reasons the use of these compounds has not become widespread.

The combination of several metal compounds is described in US 4,122,107 (Sb/Zn(Ca,Mn); US 4,356,299, US 4,501,878 and US 5,286,836 (Ti/Sb); US 5,565,545 and US 5,644,019 (Sb/Ge); US 5,608,032 and US 5,623,047 (Sb/Co(Mg,Zn,Mn,Pb): At least one component of these complex catalysts is a classic" polycondensation catalyst, either antimony, titanium or germanium. In the most favorable case, the activity of these systems lies in the range of activity of a pure antimony compound.

Finely dispersed titanates are the object of US patent 5,656,716.

Jointly precipitated titanium and silicon compounds and titanium and zirconium compounds are described in US patents 5,684,116 and 5,789,528.

A polycondensation catalyst based on zeolites (alkali or alkaline earth-modified alumine-silicate) is protected by US patent 5,733,969.

The object of patent WO 01/42335 (which corresponds to co-pending US 2003/216253 A1) is the use of hydrotalcites as effective catalysts for polycondensation reactions. These compounds exhibit a higher activity than for instance antimony compounds, particularly in the liquid phase (melt phase).

Santacesaria et aL "Heterogeneous basic catalysts for the transesterfication and the polycondensation reactions in PET production from DMT", Journal of Molecular Catalysis (Elsevier) describes the use of hydrotalcites as effective catalysts for polycondensation reactions. These compounds exhibit a higher activity than antimony compounds, particularly in the liquid phase (melt phase). US Patents 3,879,525; 5,972,245; and 5,247,103 along with Vaccari et. al. "Hydrotalcite-type anionic clays: Preparation, Properties and Applications", Catalysis Today, 11 (1991) 173-301 Elsevier Science Publishers, further describe hydrotalcite and its uses.

The use of antimony compounds is especially preferred, since the selectivity of the catalyzed polycondensation reactions is highest and the reaction rate of the polycondensation is adequate. The content in undesirable degradation products, such as acetaldehyde, is lowest in the processed polyester, compared to titanium compounds, for instance.

However, the use of antimony compounds such as antimony oxide, antimony acetate or antimony glycolate as catalysts for polycondensation reactions is permissible only within defined limits, since these substances are physiologically objectionable, as heavy metal compounds. For this reason it is not possible to increase the reaction rate of the polycondensation reactions indefinitely by increasing the catalyst concentration. Another cause for the economically unsatisfactory reaction rate is the fact that the rate of the two reaction steps (melt phase and solid state) depends not only the temperature, but also very strongly on the diffusion of volatile reaction products, such as ethylene glycol.

The invention is based on the task of developing a catalyst system for the synthesis of polyesters, in particular poly(ethylene terephthalate) and its copolyesters that at clearly increased catalytic activity, does not affect or affects only minimally the application-related properties of the polyester. In addition, the use of these systems should be physiologically safe.

It was very surprisingly found that using a combination of certain in part already known polycondensation catalysts, the reaction rates in the melt phase and in the solid state during the manufacture of polyethylene terephthalate could be clearly increased, without negatively affecting the quality of the polyester. These new catalyst systems according to the invention consist of:
a) a classic polycondensation catalyst of antimony, germanium or titanium compounds such as antimony acetate, antimony oxide, antimony glycolate, germanium oxide or tetrabutyl titanate,
b) a second, heterogeneous catalyst such as hydrotalcite or hydrotalcite-like compounds of general formula

   [M(II)₁₋ₓM(III)ₓ(OH)₂]^{x+}(Aⁿ⁻_{x/n})·m H₂O,

   in which M(II) stands for divalent metals, in particular magnesium, zinc, nickel, copper,
   iron(II) or cobalt(II); M(III) for trivalent metals, such as aluminum or iron(III) and
   A for anions such as carbonates, borates or titanyl compounds, and
c) a stabilizer, preferably an ester of phosphoric acid or phosphorous or phosphonic acid.

It was surprisingly found that combinations of these catalysts exhibit synergistic effects. The polycondensation rate in the liquid phase at temperatures of 250-300°C can be increased by 30 - > 100percent with the smallest additions of the heterogeneous component (approx. 5-50 ppm). The situation is similar in solid phase polycondensation (solid state) at temperatures of 180-230°C. For additions of 5 - 50 ppm of the heterogeneous component, only little catalytically active in the solid state, here too the reaction rate of this polycondensation reaction can be increased by up to 50 percent

These new catalyst systems are preferably used with the following composition:
antimony or germanium compounds 50-1000 ppm , heterogeneous catalyst 1-100 ppm (depending on particle size) and esters of phosphoric or phosphorous acids, 5-500 ppm. The heterogeneous catalysts are preferably used with particle sizes between 50 nm and approx. 3 µm. Systems with a ratio of homogeneous/heterogeneous-acting catalyst of from 100:1 to 1:5, preferably of 80:1 to 5:1, are especially preferred.

The invention will be elucidated below by means of implementation examples. The intrinsic viscosity (IV) of the synthesized polyesters was determined on an instrument of the Schott company (AVSPro), on 250 mg polyester dissolved in 50 ml phenol /dichlorobenzene (1:1).

The acetaldehyde determination in the extruded products used the following procedure:
The PET material was precooled in liquid nitrogen and milled in an ultracentrifugal mill. The comminuted material was immediately weighed into a headspace vial and sealed gas-tight with a septum. After 90 min of thermostatting at 150°C in the headspace sampler, an aliquot of gas at a known pressure was injected onto the GC column.

The following procedure was used to synthesize the polyesters:
In a 200 L- alloyed steel reactor were preplaced a suspension of 60.675 kg terephthalic and 1.44 kg isophthalic acid in 31.6 kg ethylene glycol. While stirring, add to this reaction mixture the appropriate amount of antimony triacetate, 8.125 g cobalt acetate tetrahydrate in 1000 g ethylene glycol and 34.65 g tetramethylammonium hydroxide in 500 g ethylene glycol. The sealed reactor was heated to 272°C. The slow depressurization of the pressurized container began at 2.8 bar. After approx. 20 min, the heterogeneous catalyst in 500 g ethylene glycol and 4 g Irgafos P-EPQ as glycolic solution were added, at normal pressure.

Liquid phase polymerization was next started, by slowly applying a vacuum. After approx. 60 min the final vacuum of approx. 4 mbar was attained. The end of the reaction was indicated by achieving a defined torque.

The reaction vessel was depressurized with nitrogen and the reactor was emptied into a water bath through various nozzles, over a period of approx. 60 minutes. The product strands were granulated immediately.
Table 1 shows an overview of the reaction times of the liquid phase polycondensation.

**Tab.1 Reaction time and viscosity in liquid phase polycondensation as a function of the catalyst system used**

| Experiment No. | Catalyst (ppm) | heterogeneous catalyst (ppm) | Reaction time (min) | Viscosity number per DIN ISO 1628/5 (ml/g) | intrinsic viscosity (dl/g)³⁾ |
|---|---|---|---|---|---|
| 1 (Comparison example) | Antimony acetate (640)¹⁾ | 0 | 185 | 74.2 | 0.643 |
| 2 (Implementation example) | Antimony acetate (640)¹⁾ | Hydrotalcite Pural Mg 61 HT⁴⁾ (50) | 90 | 78.9 | 0.68 |
| 3 (Implementation examplel) | Antimony acetate (640)¹⁾ | Hydrotalcite Pural Mg 61 HT (25) | 93 | 77.9 | 0.672 |
| 4 (Implementation example) | Antimony acetate (640)¹⁾ | Hydrotalcite Pural Mg 61 HT (10) | 95 | 75.4 | 0,661 |
| 5 (Implementation example) | Antimony acetate (490)²⁾ | Hydrotalcite Pural Mg 61 HT (50) | 90 | 80.2 | 0.69 |

| | | | | | |
|---|---|---|---|---|---|
| ¹⁾ corresponds to a concentration of approx. 260 ppm antimony in the polyester ²⁾ corresponds to a concentration of approx. 200 ppm antimony in the polyester ³⁾ in o-chlorophenol ⁴⁾ Trade name of the SASOL company | | | | | |

Table 1 clearly shows that even the smallest additions of the heterogeneous component are able to markedly increase the polycondensation rate in the melt phase.

If the polyester is to be used to package foods, then the polycondensation reaction in liquid phase is followed by a so-called solid-state polycondensation. The purpose of this procedural step is to drastically reduce the byproducts formed during the melt phase polycondensation - such as acetaldehyde - and simultaneously increase the intrinsic viscosity. The viscosity increase is necessary to achieve the desired mechanical properties in the end product. This reaction is performed at temperatures of 180-230°C. The procedural step is especially cost-intensive because of the need to use pure nitrogen as process gas.

The solid-state polycondensation occurs according to the procedure described below. The solid-state reaction was performed in a laboratory glass reactor of the BÜHLER Co., in a pulsating fluidized bed. 3 kg amorphous PET pellets were placed in the reactor preheated to 150°C. The volume flow of the process gas (nitrogen) flowing through the PET was of 125 Nm³/h. Approx. 15 m³/h nitrogen were removed from the circulation through a removal loop and replaced with network nitrogen. The crystallization and drying of the PET was performed at 170°C over a period of 2.5 h following the addition of the amorphous PET pellets. The solid-state reaction occurred next over a period of 6 h, at a temperature of 210°C and at the parameters mentioned (volume flow, amount removed). 50 g samples were taken at regular intervals and without affecting the process parameters.

Table 2 below shows the values of intrinsic viscosity obtained during the solid state polycondensation of polyesters with various catalyst systems.

**Tab. 2 SSP rate as a function of the catalyst system**

| Experiment No. | Catalyst system | SSP time (h) | ΔIV (dl/g) |
|---|---|---|---|
| 1 (Comparison example) | 260 ppm Sb | 0 | 0 |
| | | 2 | 0.058 |
| | | 4 | 0.116 |
| | | 7 | 0.173 |
| | | | |
| 2 (Implementation example) | 200 ppm Sb/ 50 ppm HT/ 100 ppm P-EPQ | 0 | 0 |
| | | 1.75 | 0.061 |
| | | 3 | 0.112 |
| | | 4.75 | 0.163 |
| | | 6 | 0.202 |
| | | | |
| 3 (Implementation example) | 260 ppm Sb/ 25 ppm HT/ 150 ppm P-EPQ | 0 | 0 |
| | | 1.75 | 0.079 |
| | | 3 | 0.125 |
| | | 4.75 | 0.166 |
| | | 6 | 0.204 |
| | | | |
| 4 (Implementation example | 260 ppm Sb/ 50 ppm HT/ 100 ppm P-EPQ | 0 | 0 |
| | | 1.75 | 0.068 |
| | | 3 | 0.115 |
| | | 4.75 | 0.18 |
| | | 6 | 0.215 |

Table 2 illustrates the significant effect of the catalyst system according to the invention on the reaction rate in solid-state polycondensation.

## Claims

1. A catalyst system for polycondensation reactions comprising:
a) an antimony, germanium or titanium compound, and
b) a hydrotalcite compound.

2. A catalyst system of claim 1 wherein said hydrotalcite compound is **characterized by** including a divalent metal selected from: magnesium zinc, nickel, copper, iron (II) and cobalt (II); a trivalent metal selected: from aluminum and iron (III); and an anion selected from: carbonate, borate and titanyl.

3. A catalyst system of claims 1 to 2 wherein said hydrotalcite compound is represented by the general formula:
[M(II)₁₋ₓM(III)ₓ(OH)₂]^{x+}(Aⁿ⁻_{x/n})- m H₂O
wherein:
M(II) is a divalent metal selected from: magnesium, zinc, nickel, copper, iron(II) and cobalt (II);
M(III) is a trivalent metal selected from: aluminum and iron(III); and
A is an anion selected from carbonates, borates and titanyl compounds.

4. A catalyst system of claims 1 to 3 further comprising a titanium compound.

5. A catalyst system of claims I to 4 comprising tetrabutyl titanate.

6. A catalyst system of claims 1 to 3 further comprising at least one of the following: antimony acetate, antimony oxide, antimony glycolate, and germanium oxide

7. A catalyst system of claims 1 to 6 comprising a stabilizer selected from at least one of: an ester of phosphoric acid, an ester of phosphorous acid, and an ester of phosphonic acid.

8. A catalyst system for polycondensation reactions comprising:
a) titanium compound, and
b) a hydrotalcite compound **characterized by** including a divalent metal selected from: magnesium zinc, nickel, copper, iron (II) and cobalt (II); a trivalent metal selected from: aluminum and iron (III); and an anion selected from: carbonate, borate and titanyl.

9. A method for conducting a polycondensation reaction using a catalyst system comprising,
a) an antimony, germanium or titanium compound, and
b) a hydrotalcite compound **characterized by** including a divalent metal selected from: magnesium zinc, nickel, copper, iron (II) and cobalt (II); a trivalent metal selected from: aluminum and iron (III); and an anion selected from: carbonate, borate and titanyl.

## Patentansprüche

1. Katalysatorsystem für Polykondensationsreaktionen, umfassend:
a) eine Antimon-, Germanium- oder Titanverbindung, und
b) eine Hydrotalcitverbindung.

2. Katalysatorsystem nach Anspruch 1, wobei die Hydrotalcitverbindung **dadurch gekennzeichnet ist, dass** sie ein zweiwertiges Metall ausgewählt aus Magnesium, Zink, Nickel, Kupfer, Eisen (II) und Cobalt (II), ein dreiwertiges Metall ausgewählt aus Aluminium und Eisen (III), und ein Anion ausgewählt aus Carbonat, Borat und Titanyl umfasst.

3. Katalysatorsystem nach einem der Ansprüche 1 bis 2, wobei die Hydrotalcitverbindung durch die allgemeine Formel
[M(II)₁₋ₓM(III)ₓ(OH)₂]^{x+}(Aⁿ⁻_{x/n})·m H₂O
dargestellt ist, wobei
M (II) ein zweiwertiges Metall ausgewählt aus Magnesium, Zink, Nickel, Kupfer, Eisen (II) und Cobalt (II) ist,
M (III) ein dreiwertiges Metall ausgewählt aus Aluminium und Eisen (III) ist, und
A ein Anion ausgewählt aus Carbonaten, Boraten und Titanylverbindungen ist.

4. Katalysatorsystem nach einem der Ansprüche 1 bis 3, weiterhin umfassend eine Titanverbindung.

5. Katalysatorsystem nach einem der Ansprüche 1 bis 4, umfassend Tetrabutyltitanat.

6. Katalysatorsystem nach einem der Ansprüche 1 bis 3, weiterhin umfassend mindestens eines der nachfolgenden: Antimonacetat, Antimonoxid, Antimonglycolat und Germaniumoxid,

7. Katalysatorsystem nach einem der Ansprüche 1 bis 6, umfassend einen Stabilisator ausgewählt aus mindestens einem von: einem Phosphorsäureester, einem Phosphorigsäureester und einem Phosphonsäureester.

8. Katalysatorsystem für Polykondensationsreaktionen, umfassend:
a) eine Titanverbindung, und
b) eine Hydrotalcitverbindung, welche **dadurch gekennzeichnet ist, dass** sie ein zweiwertiges Metall ausgewählt aus Magnesium, Zink, Nickel, Kupfer, Eisen (11) und Cobalt (II), ein dreiwertiges Metall ausgewählt aus Aluminium und Eisen (III), und ein Anion ausgewählt aus Carbonat, Borat und Titanyl umfasst.

9. Verfahren zur Durchführung einer Polykondensationsreaktion unter Verwendung eines Katalysatorsystems, welches umfasst:
a) eine Antimon-, Germanium- oder Titanverbindung, und
b) eine Hydrotalcitverbindung, welche **dadurch gekennzeichnet ist, dass** sie ein zweiwertiges Metall ausgewählt aus Magnesium, Zink, Nickel, Kupfer, Eisen (II) und Cobalt (II), ein dreiwertiges Metall ausgewählt aus Aluminium und Eisen (III), und ein Anion ausgewählt aus Carbonat, Borat und Titanyl umfasst.

## Revendications

1. Système catalyseur pour réactions de polycondensation, qui comprend :
a) un composé de l'antimoine, du germanium ou du titane,
b) et un composé de type hydrotalcite.

2. Système catalyseur conforme à la revendication 1, dans lequel ledit composé de type hydrotalcite est **caractérisé en ce qu'**il comporte un métal divalent choisi parmi les magnésium, zinc, nickel, cuivre, fer-II et cobalt-II, un métal trivalent choisi parmi l'aluminium et le fer-III, et un anion choisi parmi les ions de type carbonate, borate ou titanyle.

3. Système catalyseur conforme à la revendication 1 ou 2, dans lequel ledit composé de type hydrotalcite est représenté par la formule :
[M(II)₁₋ₓM(III)ₓ(OH)₂]^{x+}(Aⁿ⁻_{x/n})·mH₂O
dans laquelle :
- M(II) représente un métal divalent choisi parmi les magnésium, zinc, nickel, cuivre, fer-II et cobalt-II,
- M(III) représente un métal trivalent choisi parmi l'aluminium et le fer-III,
- et A représente un anion choisi parmi les ions de type carbonate, borate ou titanyle.

4. Système catalyseur conforme à l'une des revendications 1 à 3, qui comprend en outre un composé du titane.

5. Système catalyseur conforme à l'une des revendications 1 à 4, qui comprend du titanate de tétrabutyle.

6. Système catalyseur conforme à l'une des revendications 1 à 3, qui comprend en outre au moins l'un des composés suivants : acétate d'antimoine, oxyde d'antimoine, glycolate d'antimoine et oxyde de germanium.

7. Système catalyseur conforme à l'une des revendications 1 à 6, qui comprend un stabilisant qui est au moins un composé choisi parmi les esters d'acide phosphorique, les esters d'acide phosphoreux et les esters d'acide phosphonique.

8. Système catalyseur pour réactions de polycondensation, qui comprend :
a) un composé du titane,
b) et un composé de type hydrotalcite, **caractérisé en ce qu'**il comporte un métal divalent choisi parmi les magnésium, zinc, nickel, cuivre, fer-II et cobalt-II, un métal trivalent choisi parmi l'aluminium et le fer-III, et un anion choisi parmi les ions de type carbonate, borate ou titanyle

9. Procédé de réalisation d'une réaction de polycondensation, dans lequel on se sert d'un système catalyseur comprenant :
a) un composé de l'antimoine, du germanium ou du titane,
b) et un composé de type hydrotalcite, **caractérisé en ce qu'**il comporte un métal divalent choisi parmi les magnésium, zinc, nickel, cuivre, fer-II et cobalt-II, un métal trivalent choisi parmi l'aluminium et le fer-III, et un anion choisi parmi les ions de type carbonate, borate ou titanyle.
